# EUROPÄISCHE PATENTSCHRIFT

(11) **EP 4 401 214 B1**
(45) Veröffentlichungstag und Bekanntmachung des Hinweises auf die Patenterteilung: **15.04.2026**
(21) Anmeldenummer: 23151182.5
(22) Anmeldetag: 11.01.2023
(51) Int. Cl.: H01M 50/213, H01M 50/342, H01M 50/358

(54) **BATTERIEMODUL MIT EINER MEHRZAHL VON ELEKTROCHEMISCHEN ENERGIESPEICHERELEMENTEN**
BATTERY MODULE COMPRISING A PLURALITY OF ELECTROCHEMICAL ENERGY STORAGE ELEMENTS
MODULE DE BATTERIE COMPRENANT UNE PLURALITÉ D'ÉLÉMENTS ACCUMULATEURS D'ÉNERGIE ÉLECTROCHIMIQUES

(43) Veröffentlichungstag der Anmeldung: 17.07.2024
(73) Patentinhaber: VARTA Microbattery GmbH, 73479 Ellwangen Jagst (DE)
(72) Erfinder: Magg, Manfred, 86316 Friedberg (DE); Rohr, Lukas, 86720 Nördlingen (DE)
(74) Vertreter: Ostertag & Partner Patentanwälte mbB

(56) Entgegenhaltungen:
- WO-A1-2018/089036
- WO-A1-2022/008080
- WO-A1-2022/268501

## Beschreibung

Die vorliegende Erfindung betrifft ein Batteriemodul mit einem Gehäuse und einer Mehrzahl von elektrochemischen Energiespeicherelementen innerhalb des Gehäuses.

### ANWENDUNGSGEBIET UND STAND DER TECHNIK

Bei Batteriemodulen handelt es sich um wiederaufladbare elektrische Energiespeicher, die beispielsweise in automobilen Anwendungen verwendet werden. In einem Batteriemodul werden eine Mehrzahl einzelner elektrochemischer Energiespeicherelemente in geeigneter Weise zusammengeschaltet, um die für verschiedene Anwendungen erforderlichen hohen Ströme und Spannungen bereitstellen zu können.

Unter Energiespeicherelementen werden vorliegend sowohl einzelne, zur Speicherung von elektrischer Energie befähigte elektrochemische Zellen als auch Einheiten mit mehreren elektrisch miteinander verschalteten, zur Speicherung von elektrischer Energie befähigten elektrochemischen Zellen verstanden. Jede elektrochemische Zelle und damit jedes Energiespeicherelement im Sinne der vorliegenden Anmeldung umfasst mindestens eine positive und mindestens eine negative Elektrode, welche über einen Elektrolyten voneinander getrennt sind.

In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab. Eine bei vergleichsweise höherem Redoxpotential stattfindende Teilreaktion läuft an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem, der Elektrodenreaktion entsprechenden Ionenstrom innerhalb der elektrochemischen Zelle. Dieser Ionenstrom wird durch einen ionenleitenden Elektrolyten ermöglicht. Getrennt sind die Elektroden meist durch einen Separator.

In sekundären (wiederaufladbaren) elektrochemischen Zellen ist diese Entladereaktion reversibel. Es besteht also die Möglichkeit, die bei der Entladung erfolgte Umwandlung chemischer Energie in elektrische Energie umzukehren.

Eine in Batteriemodulen oftmals verwendete elektrochemische Zelle ist die Lithium-Ionen-Zelle. Diese umfasst Elektroden, die Lithiumionen reversibel aufnehmen und wieder abgeben können, sowie einen Lithiumionen enthaltenden Elektrolyten. Auch Natrium-Ionen-Zellen stehen immer stärker im Fokus. Diese umfassen Elektroden, die Natriumionen reversibel aufnehmen und wieder abgeben können, sowie einen Natriumionen enthaltenden Elektrolyten.

Bei dem Betrieb von elektrochemischen Zellen bzw. von elektrochemischen Energiespeicherelementen und insbesondere bei dem Betrieb eines Batteriemoduls mit einer Mehrzahl von elektrochemischen Energiespeicherelementen entsteht Wärme. Sowohl bei der Energieabgabe als auch beim Laden erwärmen sich die Elemente. Eine Überhitzung kann zu Beeinträchtigungen und Schädigungen der elektrochemischen Energiespeicherelemente führen.

Allgemein kann ein elektrochemisches Energiespeicherelement durch verschiedene Fehler in ein thermisches Ungleichgewicht geraten. Ein thermisches Ungleichgewicht der Energiespeicherelemente kann beispielsweise durch unsachgemäßen Umgang auftreten, beispielsweise, indem die Energiespeicherelemente überladen oder beschädigt werden oder durch batterieintern auftretende Kurzschlüsse oder Verunreinigungen. Bei einem thermischen Ungleichgewicht kann es zu einem Durchbrennen des Elements (thermal runaway) kommen. Hierbei beginnt das Element zu brennen und es werden große Mengen von heißen, teils brennenden Gasen ausgestoßen. Besonders problematisch hierbei ist, dass das Brennen eines Elements sich auf andere Elemente des Batteriemoduls übertragen kann (thermal propagation) und sich das Durchbrennen im Sinne einer Kettenreaktion in den benachbarten Elementen fortsetzt. Hierbei spielen vor allem zwei Mechanismen eine große Rolle. Zum einen kommt es zu einer Wärmeübertragung durch Kontaktmaterialien im Batteriemodul. Zum anderen kommt es zu einer Wärmeübertragung durch die sich verbreitenden heißen Gase.

Um ein Durchbrennen des Energiespeicherelements zu verhindern, ist es bereits bekannt, die Energiespeicherelemente mit Überdruckelementen, beispielsweise einem Überdruckventil in Form einer Berstmembran oder eines Berstkreuzes oder einer anderen Sollbruchstelle auszustatten, um bei einem übermäßigen Gasdruck die heißen Gase aus dem jeweiligen Energiespeicherelement ablassen zu können. Hierdurch kann zwar die Gefahr eines thermischen Durchgehens des jeweiligen Energiespeicherelements verringert werden, es besteht jedoch weiterhin die Gefahr, dass die austretenden Gase und gegebenenfalls mitgerissene Partikel benachbarte Energiespeicherelemente angreifen und zu einer Überhitzung von benachbarten Energiespeicherelementen und zu einer Beschädigung dieser benachbarten Elemente führen.

Bei verschiedenen Anwendungen von Batteriemodulen, insbesondere bei Anwendungen im Automobilbereich oder bei stationären Batterieschränken, wird gefordert, dass das Übergreifen des Brennens eines Elements auf andere Elemente verhindert wird. Diese Forderung kann herkömmlicherweise in der Regel nur mit erheblichem konstruktivem Mehraufwand erfüllt werden.

Die DE 10 2013 204 585 A1 beschreibt ein Batteriepack mit mehreren Batteriezellen. Für den Entgasungsfall, bei dem eine einzelne Batteriezelle Gas aus ihrem Inneren freisetzt, ist in dem Batteriepack-Gehäuse ein Freiraum vorgesehen, in den hinein sich das freigesetzte Gas entspannen kann. Anschließend wird das Gas durch eine Überdruckablassvorrichtung aus dem Inneren des Batteriepack-Gehäuses nach außen freigesetzt und durchströmt dabei einen Partikelabscheider, wodurch in dem Gas enthaltende Partikel, die explosionsfähig sein können, herausgefiltert werden.

Die DE 10 2014 213 916 A1 offenbart ein Batteriesystem mit einem Batteriemodul mit mehreren Batteriezellen. Die Batteriezellen weisen jeweils ein Zellgehäuse auf, das für den Fehlerfall mit einem Entgasungsventil ausgestattet ist. Das Batteriesystem umfasst weiterhin einen Entgasungskollektor zum Ableiten der Entgasungsemission aus dem Batteriesystem. Dieser Entgasungskollektor ist verformbar und kann sich vergrößern.

Die EP 2 800 165 B1 beschreibt eine Batterie, die mindestens zwei nebeneinander angeordnete Batteriezellen umfasst. Die Batteriezellen sind jeweils mit einem Entgasungselement ausgestattet. Weiterhin umfasst die Batterie eine Abdeckung, die zumindest einen Teil der Oberflächen der Batteriezellen sowie die Entgasungselemente abdeckt und die im Bereich der Entgasungselemente Sollbruchstellen aufweist.

Aus der WO 2022/008080 A1 ist ein Batteriemodul bekannt, das eine Struktur mit Sollbruchstellen aufweist, die im Brandfall eine Ableitung von Gasen ermöglicht. Die Sollbruchstellen können als Klappenstruktur mit einer Teilkreisform ausgebildet sein.

Aus der WO 2018/089036 A1 ist eine Batterie bekannt, die eine Platte mit mehreren Sollbuchstellen aufweist, über die im Brandfall Gase in einen darüber liegenden Raum abgeleitet werden können. Das Dokument offenbart nicht, dass oberhalb der thermisch stabilen Platte eine Mehrzahl von parallel verlaufenden Gaskanälen vorgesehen ist, denen jeweils mehrere Energiespeicherelemente zugeordnet sind.

Aus der WO 2022/268501 A1 ist eine als Abschirmvorrichtung ausgebildete Platte bekannt, in der Öffnungen aufbrechen können, so dass entstehende Gase über einen Entgasungskanal abgeleitet werden können.

### AUFGABE UND LÖSUNG

Da die aus dem Stand der Technik beschriebenen Ansätze das Problem einer thermischen Kettenreaktion bei dem Austreten von brennbaren Gasen aus einem einzelnen Energiespeicherelement eines Batteriemoduls nicht in befriedigender Weise lösen, stellt sich die Erfindung die Aufgabe, ein verbessertes Batteriemodul bereitzustellen, dass in konstruktiv einfacher Weise eine solche thermische Kettenreaktion verhindern soll.

Diese Aufgabe wird durch ein Batteriemodul mit einem Gehäuse und mit einer Mehrzahl von elektrochemischen Energiespeicherelementen gelöst, wie es sich aus dem Anspruch 1 ergibt.

Bevorzugte Ausgestaltungen des Batteriemoduls ergeben sich aus den abhängigen Ansprüchen.

Das erfindungsgemäße Batteriemodul umfasst ein Gehäuse und eine Mehrzahl von elektrochemischen Energiespeicherelementen innerhalb des Gehäuses. Das Batteriemodul zeichnet sich dabei durch die folgenden Merkmale a. bis e. aus:
a. Die Energiespeicherelemente sind in mindestens einer Ebene angeordnet;
b. Oberhalb von mindestens einer der Ebenen mit den Energiespeicherelementen befindet sich eine thermisch stabile Platte;
c. In der thermisch stabilen Platte sind mehrere Sollbruchstellen vorgesehen, die jeweils einem oder mehreren Energiespeicherelementen räumlich zugeordnet sind;
d. Die Sollbruchstellen sind derart eingerichtet, dass sie sich bei auftretendem Gasdruck öffnen;
e. Oberhalb der thermisch stabilen Platte befindet sich ein Raum zur Ableitung von Gasen.

Das erfindungsgemäße Batteriemodul stellt eine konstruktiv einfach und vorteilhaft zu realisierende Lösung zur Vermeidung einer thermischen Kettenreaktion in einem Batteriemodul dar. Wenn ein Energiespeicherelement innerhalb des erfindungsgemäßen Batteriemoduls in ein thermisches Ungleichgewicht gerät und heiße Gase ausstößt, öffnet der Gasdruck die jeweilige Sollbruchstelle, die dem Energiespeicherelement räumlich zugeordnet ist, sodass die heißen Gase den Raum, in dem die Energiespeicherelemente angeordnet sind, durch die thermisch stabile Platte hindurch verlassen können. Über den Raum oberhalb der thermisch stabilen Platte werden die heißen Gase abgeleitet, so dass eine thermische Kettenreaktion vermieden wird. Die thermisch stabile Platte wird durch die heißen Gase dabei nicht angegriffen, da sie thermisch gegenüber den heißen Gasen stabil ist.

Die räumliche Zuordnung der Sollbruchstellen in der thermisch stabilen Platte in Bezug zu dem jeweils einen oder gegebenenfalls in Bezug zu mehreren Energiespeicherelementen ist zweckmäßigerweise so ausgestaltet, dass sich die Sollbruchstelle in der thermisch stabilen Platte in einem kürzesten Abstand zu dem oder den jeweiligen Energiespeicherelementen befindet, sodass eine enge räumliche Nähe gewährleistet ist.

Die thermische stabile Platte selbst zeichnet sich bevorzugterweise durch eine mechanische Stabilität und eine Formstabilität aus.

Das Gehäuse des Batteriemoduls kann beispielsweise aus Aluminium oder zumindest teilweise aus Aluminium gefertigt sein.

Die Energiespeicherelemente innerhalb des Gehäuses können in an sich bekannter Weise in einer oder in mehreren Ebenen angeordnet sein, wobei die Energiespeicherelemente jeweils parallel und/oder in Reihe geschaltet sein können, um so die durch das Batteriemodul bereitstellbare Stromstärke zu erhöhen. In bevorzugten Ausführungsformen sind die Energiespeicherelemente innerhalb des Batteriemoduls in einem Zellhalter, beispielsweise einem Kunststoffrahmen, angeordnet.

Das erfindungsgemäße Batteriemodul ist damit so ausgebildet, dass beispielsweise bei einem Durchbrennen einer Zelle eine Wärmeübertragung der heißen Gase von einem Energiespeicherelement zu dem nächsten effektiv verhindert wird. Die im Fehlerfall austretenden heißen Gase bauen einen lokalen hohen Druck auf, der die jeweilige Sollbruchstelle öffnet, so dass die heißen Gase schnell und ohne Widerstand in den oberhalb der thermisch stabilen Platte gelegenen Raum zur Ableitung der Gase gelangen können. Da sich dabei nur die Sollbruchstelle öffnet, die dem jeweiligen defekten Energiespeicherelement zugeordnet ist, gelangt das heiße Gas nicht zurück zu den anderen Energiespeicherelementen in dem Systemverbund, so dass eine Kettenreaktion vermieden wird.

Die jeweilige Sollbruchstelle zeichnet sich dadurch aus, dass sie unter Einwirkung von Gasdruck selektiv verformt wird und dabei eine lokal begrenzte Öffnung in der thermisch stabilen Platte freigibt, die von dem heißen Gas durchströmt wird. Die übrigen Bereiche der thermisch stabilen Platte werden hierdurch nicht verändert, so dass eine Trennung zwischen dem Einbauraum der Energiespeicherelemente und dem darüberliegenden Raum zur Ableitung der Gase beibehalten wird. Bei dem erfindungsgemäßen Batteriemodul wird damit eine thermische Zerstörung des Batteriemoduls durch eine Kettenreaktion zwischen den einzelnen Energiespeicherelementen des Systems verhindert, wobei das erfindungsgemäße Batteriemodul mit kleinen Bauräumen, geringem Materialeinsatz und einfacher Fertigbarkeit realisiert werden kann. Die gegebenenfalls entstehenden heißen Gase werden durch die Gestaltung der Bauräume und der Öffnungsgeometrien in einer Art und Weise abgeleitet, die eine Abschottung der einzelnen Energiespeicherelemente von dem heißen Gasstrom erlaubt.

In einer besonders bevorzugten Ausgestaltung des erfindungsgemäßen Batteriemoduls ist das folgende Merkmal vorgesehen:
a. Jeder Sollbruchstelle ist genau ein Energiespeicherelement zugeordnet.

In dieser bevorzugten Ausführungsform entspricht also die Anzahl der Sollbruchstellen der Anzahl der Energiespeicherelemente, die in der jeweiligen Ebene angeordnet sind. Hierdurch wird sichergestellt, dass im Fehlerfall eines der Energiespeicherelemente die gegebenenfalls austretenden heißen Gase sicher gegenüber allen anderen Energiespeicherelementen abgeschottet und abgeleitet werden.

In besonders bevorzugter Weise zeichnen sich die Energiespeicherelemente des erfindungsgemäßen Batteriemoduls durch das folgende zusätzliche Merkmal aus:
a. Die Energiespeicherelemente sind jeweils mit einem Überdruckelement, insbesondere einem Überdruckventil, ausgestattet.

Bei dem Überdruckventil kann es sich beispielsweise um eine an sich bekannte Berstmembran, ein Berstkreuz oder ähnlich ausgebildete Sollbruchstellen in der Hülle beziehungsweise dem Gehäuse des jeweiligen Energiespeicherelements handeln. Derartige Überdruckventile sorgen dafür, dass die sich gegebenenfalls bildenden heißen Gase aus dem Energiespeicherelement lokal kontrolliert austreten, sodass es nicht zu einer unkontrollierten Explosion des Energiespeicherelements kommt. Das Überdruckelement ist vorzugsweise im Bereich einer der Stirnseiten des Energiespeicherelements angeordnet, zweckmäßigerweise an der Stirnseite des Energiespeicherelements, die der thermisch stabilen Platte zugewandt ist.

In einer ganz besonders bevorzugten Ausführungsform des erfindungsgemäßen Batteriemoduls zeichnet sich das Batteriemodul im Hinblick auf die Sollbruchstellen durch mindestens eines der folgenden zusätzlichen Merkmale aus:
a. Die Sollbruchstellen in der thermisch stabilen Platte sind jeweils als klappbarer Deckel ausgebildet;
b. Die Sollbruchstellen in der thermisch stabilen Platte sind jeweils als teilkreisförmige Sollbruchstelle ausgebildet.

In besonders bevorzugter Weise sind die vorgenannten Merkmale a. und b. in Kombination miteinander realisiert.

Die Ausführung der Sollbruchstelle als klappbarer Deckel zeichnet sich insbesondere dadurch aus, dass nach der Öffnung der Sollbruchstelle eine Seite des Deckels mit der thermisch stabilen Platte verbunden bleibt. Gegenüber einem reinen Brechen der Sollbruchstelle hat der Klappenmechanismus den Vorteil, dass der sich lösende Bereich nicht vollständig abgelöst wird. Hierdurch wird vermieden, dass ein Teil der Sollbruchstelle abgerissen und von dem Gasstrom mitgerissen wird, was zu einer Blockierung in dem Gasableitungspfad führen könnte.

In besonders vorteilhaften Ausgestaltungen ist das Batteriemodul so ausgebildet, dass sich unterhalb der Sollbruchstellen jeweils mindestens ein mechanischer Anschlag befindet, der dafür sorgt, dass sich die als klappbare Deckel ausgebildeten Sollbruchstellen nur nach außen aber nicht nach innen öffnen können. Der mechanische Anschlag verhindert damit, dass sich die Sollbruchstelle bei einem Gegendruck von außen bzw. von oben öffnen kann. Vorteilhafterweise wird ein solcher mechanischer Anschlag von einem vorspringenden Abschnitt eines Zellhalters gebildet, der in diesem Fall neben der Funktion einer Halterung der Energiespeicherelemente auch die Funktion eines mechanischen Anschlags für die Sollbruchstellen nach innen ausübt.

Im Fall einer teilkreisförmigen Ausbildung der Sollbruchstelle ist der mechanische Anschlag vorteilhafterweise so ausgebildet, dass er sich unterhalb desjenigen Bereichs der teilkreisförmigen Sollbruchstelle befindet, der sich gegenüber des Bereichs des Teilkreises befindet, der sich im Fehlerfall nicht löst. Der mechanische Anschlag ist damit also dem sich öffnenden Bereich der Sollbruchstelle von innen zugeordnet.

Die Ausbildung als teilkreisförmige Sollbruchstelle ist besonders einfach zu realisieren, indem beispielsweise entsprechende Geometrien in die thermisch stabile Platte eingestanzt oder eingeprägt werden.

In besonders bevorzugten Ausgestaltungen zeichnen sich diese Sollbruchstellen durch mindestens eines der folgenden zusätzlichen Merkmale aus:
a. Die Sollbruchstellen in der thermisch stabilen Platte sind als Perforierungen ausgebildet;
b. Die Sollbruchstellen in der thermisch stabilen Platte sind als lokale Verdünnungen der Materialstärke der thermisch stabilen Platte ausgebildet.

Die Ausbildung der Sollbruchstellen als Perforierungen und/oder als lokale Verdünnungen der Materialstärke in der thermisch stabilen Platte im Bereich der Sollbruchstellen ist in besonders vorteilhafter Weise dazu geeignet, die Sollbruchstellen so auszubilden, dass ein vorbestimmter Öffnungsdruck durch die gegebenenfalls austretenden Gase erreicht werden muss, bevor sich die Sollbruchstelle öffnet.

Die Geometrie der Sollbruchstellen wird vorzugsweise so gewählt, dass die durch die Sollbruchstelle bedingte Öffnung in der thermisch stabilen Platte den Bereich des zweckmäßigerweise vorhandenen, jeweiligen Überdruckelements in dem Energiespeicherelement von den Abmessungen her zumindest abdeckt. So können austretende Gase ungehindert die geöffnete Sollbruchstelle durchströmen. In besonders vorteilhafter Weise ist die Sollbruchstelle so ausgebildet, dass die Öffnung größer als der Bereich des Überdruckelements ist.

Die thermisch stabile Platte des erfindungsgemäßen Batteriemoduls zeichnet sich vorzugsweise weiterhin dadurch aus, dass sie gegenüber den gegebenenfalls austretenden heißen Gasen, die im Fehlerfall eines Energiespeicherelements auftreten können, thermisch inert ist und also nicht durch die heißen Gase und die damit verbundenen hohen Temperaturen als solche deformiert oder weitergehend zerstört wird. Lediglich im Bereich der Sollbruchstelle, die im Bereich der gegebenenfalls austretenden heißen Gase angeordnet ist, findet eine Deformation derart statt, dass die jeweilige Sollbruchstelle sich öffnet und damit den Durchtritt der heißen Gase durch die thermisch stabile Platte hindurch erlaubt.

Vorzugsweise sitzt die thermisch stabile Platte nicht so dicht auf der Ebene der Energiespeicherelemente auf, dass die Energiespeicherelemente luftdicht abgedeckt wären. Vielmehr ist es vorteilhaft, wenn zwischen dem Energiespeicherelement und der thermisch stabilen Platte ein Luftraum vorhanden ist. Dies hat den Vorteil, dass ein gewisser Puffer für das Austreten von heißen Gasen und/oder für eine Ausdehnung der Luft oberhalb des Energiespeicherelements vorhanden ist, bevor sich die Sollbruchstelle öffnet. So wird ein unnötiges Öffnen der Sollbruchstelle bei nur geringer Volumenausdehnung oberhalb des Energiespeicherelements vermieden.

Im Hinblick auf besonders bevorzugte Materialien für die thermisch stabile Platte zeichnet sich das Batteriemodul in besonders bevorzugten Ausgestaltungen durch mindestens eines der folgenden zusätzlichen Merkmale aus:
a. Die thermisch stabile Platte ist aus in Kunststoff eingebetteten Mineralien gebildet;
b. Die thermisch stabile Platte ist aus in Kunstharz eingebetteten Schichtsilikaten gebildet;
c. Die thermisch stabile Platte ist aus Kunstglimmer gebildet.

Ganz besonders bevorzugt ist die Ausbildung der thermisch stabilen Platte aus Kunstglimmer. Unter Kunstglimmer ist ein Material zu verstehen, bei dem Glimmerbruckstücke in Kunstharz als Bindemittel eingebettet sind. Materialien mit dem Bestandteil Glimmer werden bereits für verschiedene Anwendungen genutzt, bei denen die thermisch stabilen Eigenschaften von Glimmer genutzt werden. Allgemein handelt es sich bei Glimmer um eine Gruppe von Mineralien aus der Abteilung der Schichtsilikate. Glimmer zeichnet sich durch eine Schichtstruktur aus, wobei zwischen den einzelnen Schichten nur schwache Bindungen bestehen. Kunstglimmer wird aus gespaltenem, gebrochenem oder gemahlenem Glimmer hergestellt und wird herkömmlicherweise vor allem als elektrischer Isolator verwendet. Für die Zwecke der Erfindung eignet sich Kunstglimmer als Material für die thermisch stabile Platte in besonderer Weise, da sich Kunstglimmer sehr gut verarbeiten lässt und durch seine hervorragenden Isoliereigenschaften eine thermische Abschottung von heißen Gasen in sehr sicherer und zuverlässiger Weise erlaubt.

Erfindungsgemäß zeichnet sich das Batteriemodul durch das folgende Merkmal aus:
a. Der Raum zur Ableitung von Gasen wird durch eine Abdeckung begrenzt.

Vorzugsweise wird diese Abdeckung von einem Gehäusedeckel gebildet, wodurch eine konstruktiv besonders vorteilhafte Ausgestaltung des Batteriemoduls möglich ist. Prinzipiell ist es auch möglich, dass die Abdeckung zusätzlich zu einem separaten Gehäusedeckel vorgesehen ist.

Weiterhin zeichnet sich das Batteriemodul im Hinblick auf die Abdeckung durch die folgenden zusätzlichen Merkmale aus:
a. Die Abdeckung bildet eine Mehrzahl von parallel verlaufenden Gaskanälen aus;
b. Jedem Gaskanal ist eine Mehrzahl der Energiespeicherelemente zugeordnet.

Durch den oder die Gaskanäle können die sich im Fehlerfall gegebenenfalls bildenden heißen Gase in besonders sicherer und zuverlässiger Weise gezielt abgeleitet werden, so dass eine thermische Kettenreaktion in dem Batteriemodul sicher vermieden wird. Die Ableitung der Gase durch die Gaskanäle verläuft dabei vorteilhafterweise so, dass die sich gegebenenfalls gebildeten heißen Gase sicher nach außerhalb abgeleitet werden. Dabei können auch zusätzliche Sicherheitsmaßnahmen vorgesehen sein. Beispielsweise kann es vorgesehen sein, dass bei der Ausleitung der Gase noch weitere Kühleinrichtungen oder beispielsweise ein Partikelabscheider vorgesehen ist, so dass die Brennbarkeit der austretenden Gase herabgesetzt wird.

In besonders bevorzugter Weise zeichnet sich das erfindungsgemäße Batteriemodul im Hinblick auf die Ausbildung der Abdeckung durch mindestens eines der folgenden zusätzlichen Merkmale aus:
a. Die Abdeckung bildet einen Niederhalter für die thermisch stabile Platte;
b. Die Abdeckung weist eine abgekantete Wellenform auf.

In besonders bevorzugter Weise sind die vorgenannten Merkmale a. und b. in Kombination miteinander verwirklicht.

Gemäß dem vorgenannten Merkmal a. erfüllt die Abdeckung zumindest zwei Funktionen. Zum einen bildet und begrenzt sie den Ableitungsraum für die sich im Fehlerfall gegebenenfalls bildenden heißen Gase. Zum anderen stellt die Abdeckung eine konstruktive Lösung für die Fixierung der thermisch stabilen Platte dar, indem sie einen Niederhalter bildet. Diese Niederhalterfunktion kann insbesondere durch eine profilierte Ausbildung der Abdeckung realisiert werden, wobei die Abdeckung so ausgebildet ist, dass sie parallel verlaufende Gaskanalräume oberhalb einer Reihe von Energiespeicherelementen ausbildet und wobei zwischen den einzelnen Gaskanälen tieferliegende Bereich vorgesehen sind, die die jeweiligen Gaskanäle voneinander trennen und gleichzeitig die thermisch stabile Platte niederhalten. In besonders vorteilhafter Weise wird dies durch eine abgekantete Wellenform der Abdeckung realisiert.

In besonders bevorzugten Ausgestaltungen des erfindungsgemäßen Batteriemoduls zeichnet sich das Batteriemodul im Hinblick auf die Energiespeicherelemente durch mindestens eines der folgenden Merkmale aus:
a. Die Energiespeicherelemente sind zylindrische Rundzellen;
b. Die Energiespeicherelemente sind Lithium-Ionen-Zellen oder Natrium-Ionen-Zellen.

Vorzugsweise sind die vorgenannten Merkmale a. und b. in Kombination miteinander realisiert.

Allgemein sind bei elektrochemischen Energiespeicherelementen verschiedene Bauformen bekannt. Neben prismatischen Formen sind zylindrische Formen, insbesondere Knopfzellen und zylindrische Rundzellen weit verbreitet. Sowohl Knopfzellen als auch zylindrische Rundzellen haben eine kreisförmige Grundfläche. Anders als Knopfzellen weisen zylindrische Rundzellen eine Höhe auf, die größer als ihr Durchmesser ist.

Das erfindungsgemäße Batteriemodul eignet sich für zylindrische Rundzellen in ganz besonderer Weise, da die Rundzellen einerseits in sehr kompakter und platzsparender Weise innerhalb des Batteriemoduls angeordnet werden können und andererseits eine einfache und sichere Konstruktion zur Vermeidung von thermischen Kettenreaktionen möglich ist.

Innerhalb des Batteriemoduls werden die Rundzellen vorzugsweise derart angeordnet, dass die Längsachsen der Rundzellen parallel zueinander liegen.

Im Vergleich mit prismatischen Elementen haben zylindrische Rundzellen den besonderen Vorteil, dass durch die zylindrische Bauart zwischen allen Zellen zwangsläufig Freiräume ausgebildet werden, die für eine thermische Isolierung der Zellen gegeneinander sorgen.

In ganz besonders bevorzugter Weise handelt es sich bei den Energiespeicherelementen um Lithium-Ionen-Zellen, insbesondere um sekundäre Lithium-Ionen-Zellen. Vorzugsweise sind diese Lithium-Ionen-Zellen in Form von zylindrischen Rundzellen ausgebildet.

Für viele Anwendungen werden bereits sekundäre Lithium-Ionen-Zellen eingesetzt, da diese Zellen hohe Ströme bereitstellen können und sich durch eine vergleichsweise hohe Energiedichte auszeichnen. Lithium-Ionen-Zellen basieren allgemein auf dem Einsatz von Lithium, welches in Form von Ionen zwischen den Elektroden der Zelle hin und her wandern kann.

Insgesamt erlaubt das erfindungsgemäße Batteriesystem einen besonders sicheren Betrieb des Batteriemoduls, da im Fehlerfall, wenn heiße Gase in einem der Energiespeicherelemente entstehen und diese aus dem Energiespeicherelement austreten, die entstehenden Gase über die jeweils zugeordnete Sollbruchstelle in den entsprechenden Gaskanal einströmen und die anderen Energiespeicherelemente demgegenüber abgeschottet bleiben. Es wird also damit vermieden, dass die heißen Gase auf andere Energiespeicherelemente des Systemverbunds treffen und diese erhitzen, so dass eine thermische Kettenreaktion mit einer Beschädigung von weiteren Energiespeicherelementen verhindert wird.

Das erfindungsgemäße Batteriemodul erlaubt diesen sicheren Betrieb unter Einsatz von kleinen Bauräumen, geringem Materialeinsatz und einfacher Fertigbarkeit. Durch die Gestaltung des Moduls mit der thermisch stabilen Platte mit einer Mehrzahl von Sollbruchstellen und dem darüber angeordneten Raum zur Ableitung der gegebenenfalls entstehenden Gase werden die anderen Energiespeicherelemente effektiv von den heißen Gasen, die gegebenenfalls bei einem Energiespeicherelement im thermischen Ungleichgewicht entstehen, abgeschottet.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigen:
- Fig. 1: Querschnitt durch ein erfindungsgemäßes Batteriemodul;
- Fig. 2: Detaildarstellung aus Fig. 1 mit geschlossener Sollbruchstelle;
- Fig. 3: Detaildarstellung aus Fig. 1 mit geöffneter Sollbruchstelle;
- Fig. 4: Aufsicht auf die Anordnung von Energiespeicherelementen in einem erfindungsgemäßen Batteriemodul;
- Fig. 5: Aufsicht auf eine thermisch stabile Platte mit Sollbruchstellen als Bestandteil eines erfindungsgemäßen Batteriemoduls; und
- Fig. 6: Querschnitt durch ein Batteriemodul, das nicht Teil der Erfindung ist.

### BESCHREIBUNG BEVORZUGTER AUSFÜHRUNGSBEISPIELE

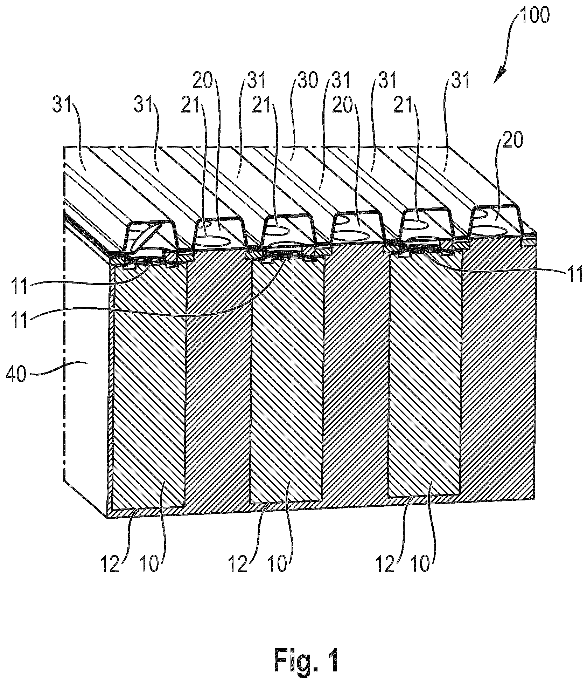

**Fig. 1** zeigt einen Querschnitt durch ein erfindungsgemäßes Batteriemodul 100. Im Anschnitt sind drei Energiespeicherelemente 10 in Form von zylindrischen Rundzellen zu erkennen. Die Energiespeicherelemente 10 sind dabei in kompakter Weise in mehreren Reihen angeordnet. Zwischen benachbarten Reihen sind die zylindrischen Rundzellen etwas versetzt zueinander angeordnet sind, so dass der Anschnitt in Fig. 1 nur bei jeder zweiten Reihe einen Schnitt durch die Energiespeicherelemente 10 zeigt. Die Energiespeicherelemente 10 sind entlang ihrer jeweiligen Längsachsen parallel zueinander ausgerichtet und bilden so eine Ebene. Im oberen Bereich der Energiespeicherelemente 10 befindet sich beispielsweise jeweils der Minuspol 11 des jeweiligen Elements 10. Der Pluspol 12 kann auf der gegenüberliegenden Stirnseite des Energiespeicherelements 10 liegen oder beispielsweise von dem übrigen Zellengehäuse des Energiespeicherelements 10 gebildet werden.

Oberhalb der Ebene mit den Energiespeicherelementen 10 befindet sich eine thermisch stabile Platte 20, die in diesem Ausführungsbeispiel die Seite mit den jeweiligen Minuspolen 11 der Energiespeicherelemente 10 abdeckt. Hierbei handelt es sich um eine durchgehende Platte, die eine Vielzahl von Sollbruchstellen 21 aufweist, die räumlich jeweils einem der Energiespeicherelemente 10 zugeordnet sind.

Oberhalb der thermisch stabilen Platte 20 befindet sich eine Abdeckung 30, die einen Raum zur Ableitung von gegebenenfalls austretenden heißen Gasen bereitstellt. Der Raum ist in Form von mehreren einzelnen Gaskanälen 31 ausgebildet, die jeweils oberhalb einer Reihe von Energiespeicherelementen 10 parallel zueinander verlaufen. Besonders vorteilhaft ist hierbei die abgekantete Wellenform der Abdeckung 30, wobei in konstruktiv einfacher Weise die Gaskanäle 31, die den jeweiligen Reihen der Energiespeicherelemente 10 zugeordnet sind, ausgebildet werden. Das Material der Abdeckung kann teilweise oder vollständig aus Aluminium bestehen.

Die Sollbruchstellen 21 sind in Form von einzelnen Klappeinrichtungen in der thermisch stabilen Platte 20 ausgebildet, wobei für jedes einzelne Energiespeicherelement 10 eine räumlich zugeordnete Sollbruchstelle 21 vorgesehen ist. Falls eines der Energiespeicherelemente 10 in ein thermisches Ungleichgewicht gerät und anfängt zu brennen und/oder heiße Gase ausstößt, wird durch den dadurch bedingten ansteigenden lokalen Druck die zugeordnete Sollbruchstelle 21 geöffnet, so dass das heiße Gas schnell und ohne Widerstand in den entsprechenden Gaskanal 31 austreten kann. Da lediglich die klappenförmige Sollbruchstelle 21 des defekten Energiespeicherelements geöffnet wird, kann das heiße Gas nicht zurück in den Bereich der anderen Energiespeicherelemente 10 des Systemverbunds strömen und die anderen Energiespeicherelemente 10 bleiben gegenüber den heißen Gasen abgeschottet. Hierdurch wird effektiv eine Wärmeübertragung durch das heiße Gas von einem Energiespeicherelement zu dem nächsten verhindert.

Die Zuordnung von jeweils einer Sollbruchstelle 21 zu einem Energiespeicherelement 10 bewirkt eine effektive Abschottung der übrigen Energiespeicherelemente gegenüber dem defekten Energiespeicherelement, wobei eine Trennung zwischen dem jeweiligen Gaskanal 31 und dem Einbauraum der Energiespeicherelemente 10 aufrechterhalten wird.

Die Ausbildung der Sollbruchstellen 21 in Form von Klappen verhindert das Abreißen oder das Abtrennen von Material aus der thermisch stabilen Platte. Solch losgelöstes Material könnte mit dem Gasstrom im Gaskanal 31 mitgerissen werden und beispielsweise nachgeschaltete Öffnungen verschließen und blockieren. Dies wird durch die klappenförmige Ausbildung der Sollbruchstellen vermieden.

In diesem Ausführungsbeispiel kann die Abdeckung 30 zusammen mit einem weiteren Gehäusekörper 40 das Gehäuse des Batteriemoduls 100 ausbilden. Gegebenenfalls kann noch ein zusätzlicher, hier nicht gezeigter Gehäusedeckel vorgesehen sein.

Der Gehäusekörper 40 bildet eine Kammer für die Anordnung der Energiespeicherelemente 10 aus, wobei ein Zellhalter innerhalb der Kammer zur Ausrichtung und Fixierung der Energiespeicherelemente zweckmäßig ist. Oberhalb der Ebene mit den Energiespeicherelementen 10 befindet sich die thermisch stabile Platte 20 und darüber die Abdeckung 30.

Die Abdeckung 30 weist in dieser Ausführungsform eine abgekantete Wellenform auf, die mehrere parallel verlaufende Gaskanäle 31 ausbildet. Die Abdeckung 30 dient als Niederhalter für die thermisch stabile Platte 20 und zugleich als Leitvorrichtung für den gegebenenfalls auftretenden Gasstrom.

Die thermisch stabile Platte 20 ist vorzugsweise aus Kunstglimmer hergestellt. Kunstglimmer lässt sich gut verarbeiten und hat besonders vorteilhafte wärmeisolierende und/oder wärmereflektierende Eigenschaften, die die aus Kunstglimmer gefertigte thermisch stabile Platte 20 gegenüber einer Einwirkung durch Hitze schützt.

Zweckmäßigerweise sind die Energiespeicherelemente 10 in demjenigen Bereich, der der thermisch stabilen Platte 20 beziehungsweise der jeweiligen Sollbruchstelle 21 zugewandt ist, mit einer Sollbruchstelle, wie beispielsweise einer Berstmembran oder einem Berstkreuz, ausgestattet. Hierdurch wird gewährleistet, dass bei einer Gasentwicklung innerhalb des fehlerhaften Energiespeicherelements sich das Gehäuse des Energiespeicherelements kontrolliert öffnet und die entstehenden Gase in eine definierte Richtung austreten, und zwar in Richtung der thermisch stabilen Platte 20, um dort die Sollbruchstelle 21 gegebenenfalls zu öffnen.

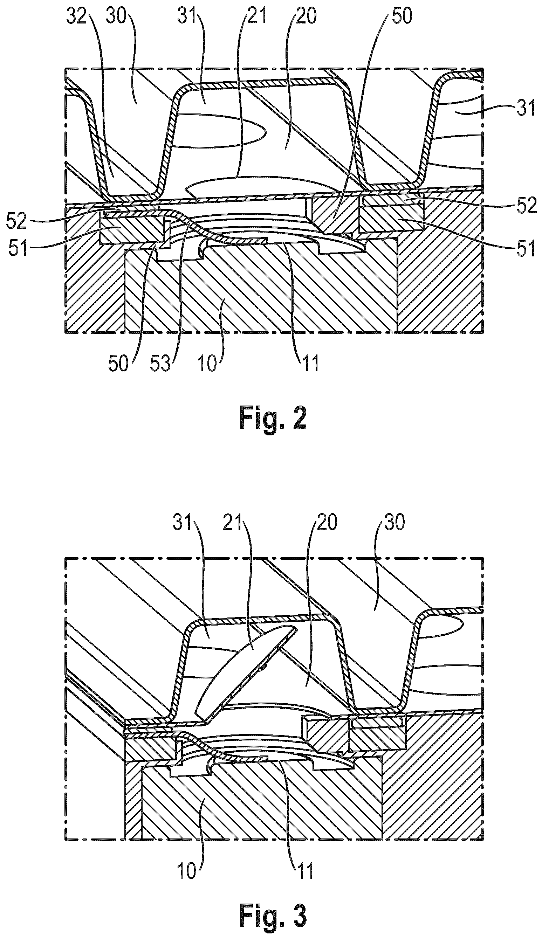

Die **Fig. 2 und 3** zeigen jeweils einen Detailausschnitt aus der Fig. 1, wobei der obere Teil eines Energiespeicherelements 10 mit dem Minuspol 11 und der darüber angeordneten thermisch stabilen Platte 20 mit der dem Energiespeicherelement 10 zugeordneten Sollbruchstelle 21 gezeigt ist. Fig. 2 zeigt den Zustand mit geschlossener Sollbruchstelle 21 und Fig. 3 zeigt den Zustand mit geöffneter Sollbruchstelle 21.

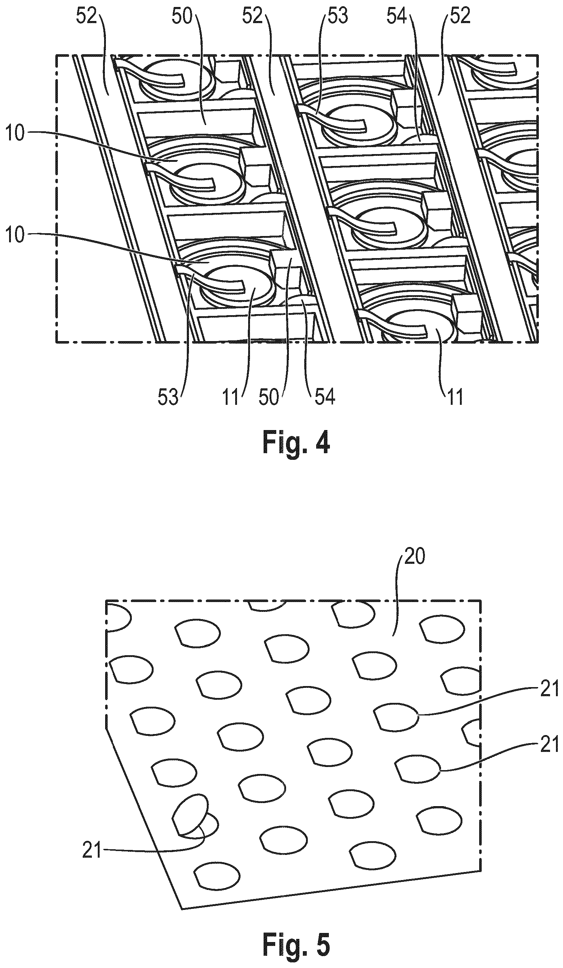

Zu erkennen sind in den Fig. 2 und 3 weitere Details der Konstruktion des Batteriemoduls. Die Energiespeicherelemente 10 werden innerhalb des Batteriemoduls von einem Zellhalter 50 fixiert, der beispielsweise aus Kunststoff gefertigt ist und einen Rahmen zur Aufnahme der Energiespeicherelemente 10 bildet. In rinnenförmigen Vertiefungen des Zellhalters 50 befinden sich Stromleiterhalterungsschienen 51. Zwischen Stromhalterungsschienen 51 und der thermisch stabilen Platte 20 verlaufen Stromleiter 52. Die Stromleiter 52 sind mit Ableitern verbunden, die den elektrischen Kontakt zu den Polen der Energiespeicherelemente 10 herstellen. In dieser Darstellung ist der Ableiter 53 zu erkennen, der den Minuspol 11 des Energiespeicherelements kontaktiert. Der Pluspol des Energiespeicherelements 10 wird durch einen hier nicht sichtbaren Ableiter (Ableiter 54 - Fig. 4) mit einem anderen Stromleiter 52 verbunden.

Die Abdeckung 30 bildet die Gaskanäle 31 aus, wobei oberhalb der Sollbruchstellen 21 die Gaskanäle 31 verlaufen. Zwischen den einzelnen Gaskanälen 31 befinden sich niederliegende Bereiche 32, die als Niederhalter und zur Fixierung der thermisch stabilen Platte 20 sowie der darunter angeordneten Stromleiter 52 und Stromleiterhalterungsschienen 51 dienen.

Fig. 3 zeigt die gleiche Anordnung wie Fig. 2, wobei in Fig. 3 der Fehlerfall angedeutet ist, in dem die Sollbruchstelle 21 durch die aus dem Energiespeicherelement 10 austretenden heißen Gase und die damit verbundene lokale Druckerhöhung geöffnet ist. Die austretenden Gase strömen durch die geöffnete Sollbruchstelle 21 in den Gaskanal 31 und können so aus dem Batteriemodul in kontrollierter Weise abgeleitet werden. Die anderen Energiespeicherelemente des Batteriemoduls bleiben durch die im Übrigen geschlossene thermisch stabile Platte 20 gegenüber diesem Gasstrom abgeschottet.

Weiterhin ist in Fig. 2 und Fig. 3 die zusätzliche Funktion des Zellhalters 50 als mechanischer Anschlag für die als klappbare Deckel ausgebildeten Sollbruchstellen 21 zu erkennen. Unterhalb der thermisch stabilen Platte 20 befindet sich auf der Seite der teilkreisförmigen Sollbruchstelle 21, die sich im Fehlerfall löst und öffnet, ein als Nase ausgebildeter Fortsatz des Zellhalters 50. Dieser Fortsatz verhindert, dass sich die als Deckel ausgebildete Sollbruchstelle 21 nach unten bzw. in Richtung der Energiespeicherzelle 10 bewegen kann. Der als Nase ausgebildete Fortsatz dient damit als mechanischer Anschlag für die Sollbruchstelle 21 bei einem gegebenenfalls auftretenden Gegendruck von oben.

**Fig.** 4 zeigt eine isolierte Darstellung der Energiespeicherelemente 10 in einer Aufsicht auf den jeweiligen Minuspol 11 der Energiespeicherelemente in ihrer Anordnung innerhalb des Zellhalters 50. Zu erkennen sind die Ableiter 53 für den Minuspol 11 und die Ableiter 54 für den Pluspol. Weiter zu erkennen sind die Stromleiter 52, an die die Ableiter 53 und 54 angeschlossen sind.

**Fig.** 5 zeigt in isolierter Darstellung eine thermisch stabile Platte 20 mit den darin vorgesehen, teilkreisförmigen Sollbruchstellen 21. Bei einer der Sollbruchstellen 21 ist die Öffnung der Sollbruchstelle angedeutet. Bei der Montage des erfindungsgemäßen Batteriemoduls wird diese thermisch stabile Platte 20 auf einer Anordnung und Verschaltung der Energiespeicherelemente 10 beispielsweise gemäß der Ausgestaltung nach Fig. 4 aufgesetzt, so dass jeweils eine Sollbruchstelle 21 einem Energiespeicherelement 10 zugeordnet ist. Mittels der hier nicht gezeigten Abdeckung wird die thermisch stabile Platte 20 auf der Anordnung der Energiespeicherelemente fixiert und gleichzeitig werden die Gaskanäle als Raum zur Ableitung der gegebenenfalls entstehenden heißen Gase bereitgestellt.

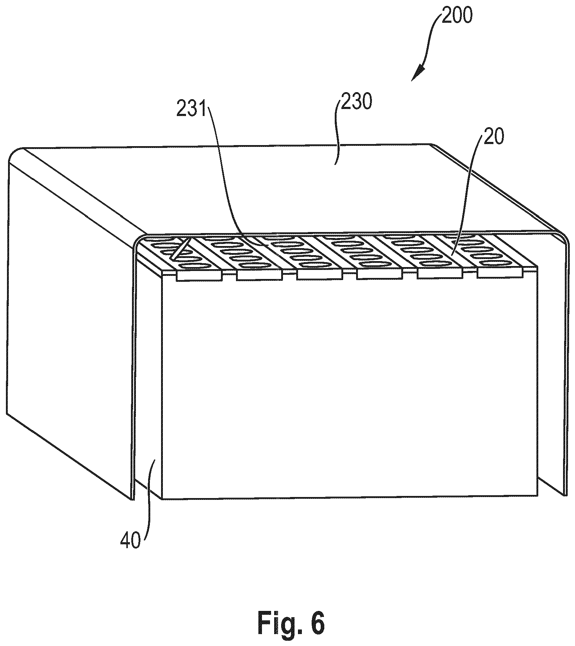

**Fig.** 6 zeigt ein weiteres Batteriemodul 200, das nicht Teil der Erfindung ist.

Hierbei unterscheidet sich diese Ausführungsform von der anhand der Fig. 1 erläuterten Ausführungsform im Wesentlichen durch die Form der Abdeckung 230, die den Raum zur Ableitung von gegebenenfalls entstehenden heißen Gasen oberhalb der thermisch stabilen Platte 20 mit den Sollbruchstellen begrenzt. Die Form der Abdeckung 230 bildet keine einzelnen Gaskanäle aus, die jeweils einer Reihe von Energiespeicherelementen zugeordnet wären, sondern bildet einen zusammenhängenden Raum 231 oberhalb der thermisch stabilen Platte 20, durch den die gegebenenfalls entstehenden heißen Gase abgeleitet werden können. Die übrigen Bestandteile des Batteriemoduls 200 in dieser Ausführungsform können in vergleichbarer Weise wie bei der anhand von Fig. 1 erläuterten Ausführungsform 100 realisiert sein. Je nach Anordnung der Systembauteile kann auch in dieser Ausführungsform 200 eine besonders vorteilhafte geometrische Gestaltung realisiert werden, die insbesondere im Hinblick auf den Materialverbrauch und die Fertigung besonders einfach und kostengünstig ist.

## Patentansprüche

1. Batteriemodul (100; 200) mit einem Gehäuse und einer Mehrzahl von elektrochemischen Energiespeicherelementen (10) innerhalb des Gehäuses, **gekennzeichnet durch** die folgenden Merkmale:
a. Die Energiespeicherelemente (10) sind in mindestens einer Ebene angeordnet;
b. Oberhalb von mindestens einer der Ebenen mit den Energiespeicherelementen (10) befindet sich eine thermisch stabile Platte (20);
c. In der thermisch stabilen Platte (20) sind mehrere Sollbruchstellen (21) vorgesehen, die jeweils einem oder mehreren Energiespeicherelementen (10) räumlich zugeordnet sind;
d. Die Sollbruchstellen (21) sind derart eingerichtet, dass sie sich bei auftretendem Gasdruck öffnen;
e. Oberhalb der thermisch stabilen Platte (20) befindet sich ein Raum (31; 231) zur Ableitung von Gasen;
f. Der Raum (31; 231) zur Ableitung von Gasen wird durch eine Abdeckung (30; 230) begrenzt;
g. Die Abdeckung (30) bildet eine Mehrzahl von parallel verlaufenden Gaskanälen (31) aus;
h. Jedem Gaskanal (31) ist eine Mehrzahl der Energiespeicherelemente (10) zugeordnet.

2. Batteriemodul nach Anspruch 1 mit dem folgenden zusätzlichen Merkmal:
a. Jeder Sollbruchstelle (21) ist genau ein Energiespeicherelement (10) zugeordnet.

3. Batteriemodul nach Anspruch 1 oder Anspruch 2 mit dem folgenden zusätzlichen Merkmal:
a. Die Energiespeicherelemente (10) sind jeweils mit einem Überdruckelement, insbesondere einem Überdruckventil, ausgestattet.

4. Batteriemodul nach einem der vorhergehenden Ansprüche mit mindestens einem der folgenden zusätzlichen Merkmale:
a. Die Sollbruchstellen (21) in der thermisch stabilen Platte (20) sind jeweils als klappbarer Deckel ausgebildet;
b. Die Sollbruchstellen (21) in der thermisch stabilen Platte (20) sind jeweils als teilkreisförmige Sollbruchstelle ausgebildet.

5. Batteriemodul nach einem der vorhergehenden Ansprüche mit mindestens einem der folgenden zusätzlichen Merkmale:
a. Die Sollbruchstellen (21) in der thermisch stabilen Platte (20) sind als Perforierungen ausgebildet;
b. Die Sollbruchstellen (21) in der thermisch stabilen Platte (20) sind als lokale Verdünnungen der Materialstärke der thermisch stabilen Platte ausgebildet.

6. Batteriemodul nach einem der vorhergehenden Ansprüche mit mindestens einem der folgenden zusätzlichen Merkmale:
a. Die thermisch stabile Platte (20) ist aus in Kunststoff eingebetteten Mineralien gebildet;
b. Die thermisch stabile Platte (20) ist aus in Kunstharz eingebetteten Schichtsilikaten gebildet;
c. Die thermisch stabile Platte (20) ist aus Kunstglimmer gebildet.

7. Batteriemodul nach Anspruch 1 mit dem folgenden zusätzlichen Merkmal:
a. Die Abdeckung (30; 231) wird von einem Gehäusedeckel gebildet.

8. Batteriemodul nach Anspruch 7 mit den folgenden zusätzlichen Merkmalen:
a. Die Abdeckung (30) bildet einen Niederhalter für die thermisch stabile Platte (20);
b. Die Abdeckung (30) weist eine abgekantete Wellenform auf.

9. Batteriemodul nach einem der vorhergehenden Ansprüche mit mindestens einem der folgenden zusätzlichen Merkmale:
a. Die Energiespeicherelemente (10) sind zylindrische Rundzellen;
b. Die Energiespeicherelemente (10) sind Lithium-Ionen-Zellen oder Natrium-Ionen-Zellen.

## Claims

1. Battery module (100; 200) comprising a housing and a plurality of electrochemical energy storage elements (10) inside the housing, **characterized by** the following features:
a. The energy storage elements (10) are located in at least one plane;
b. There is a thermally stable plate (20) above at least one of the planes with the energy storage elements (10);
c. The thermally stable plate (20) has been provided with multiple predetermined breaking points (21), each of which is spatially assigned to one or more energy storage elements (10);
d. The predetermined breaking points (21) are designed to open up when gas pressure occurs;
e. There is a gas discharge space (31; 231) above the thermally stable plate (20);
f. The gas discharge space (31; 231) is bounded by a cover (30; 230);
g. The cover (30) forms a plurality of parallel gas channels (31);
h. Each gas channel (31) is assigned a plurality of the energy storage elements (10).

2. Battery module according to Claim 1, having the following additional feature:
a. Each predetermined breaking point (21) is assigned exactly one energy storage element (10).

3. Battery module according to Claim 1 or Claim 2, having the following additional feature:
a. The energy storage elements (10) are each provided with a pressure relief element, in particular a pressure relief valve.

4. Battery module according to one of the preceding claims, comprising at least one of the following additional features:
a. The predetermined breaking points in the thermally stable plate are each formed as a hinged flap;
b. The predetermined breaking points in the thermally stable plate are each formed as a partially circular predetermined breaking point.

5. Battery module according to one of the preceding claims, comprising at least one of the following additional features:
a. The predetermined breaking points (21) in the thermally stable plate (20) are in the form of perforations;
b. The predetermined breaking points (21) in the thermally stable plate (20) are formed as local material thinning of the material thickness of the thermally stable plate.

6. Battery module according to one of the preceding claims, comprising at least one of the following additional features:
a. The thermally stable plate (20) is composed of minerals embedded in plastic;
b. The thermally stable plate (20) is composed of layered silicates embedded in synthetic resin;
c. The thermally stable plate (20) is composed of synthetic mica.

7. Battery module according to Claim 1, having the following additional feature:
a. The cover (30; 231) is formed by a housing cover.

8. Battery module according to Claim 7, having the following additional features:
a. The cover (30) forms a hold-down device for the thermally stable plate (20);
b. The cover (30) has a folded corrugated profile.

9. Battery module according to one of the preceding claims, comprising at least one of the following additional features:
a. The energy storage elements (10) are cylindrical round cells;
b. The energy storage elements (10) are lithium-ion cells or sodium-ion cells.

## Revendications

1. Module de batterie (100 ; 200) comportant un boîtier et une pluralité d'éléments accumulateurs d'énergie électrochimiques (10) à l'intérieur du boîtier, **caractérisé par** les caractéristiques suivantes :
a. les éléments accumulateurs d'énergie (10) sont disposés dans au moins un plan ;
b. au-dessus d'au moins l'un des plans comportant les éléments accumulateurs d'énergie (10) se trouve une plaque thermiquement stable (20) ;
c. dans la plaque thermiquement stable (20) sont disposés plusieurs points de rupture préétablis (21) qui sont associés spatialement chacun à un ou plusieurs éléments accumulateurs d'énergie (10) ;
d. les points de rupture préétablis (21) sont conçus de manière à s'ouvrir en cas d'apparition de pression de gaz ;
e. au-dessus de la plaque thermiquement stable (20) se trouve un espace (31 ; 231) destiné à l'évacuation de gaz ;
f. l'espace (31 ; 231) destiné à l'évacuation de gaz est délimité par un couvercle (30 ; 230) ;
g. le couvercle (30) forme une pluralité de canaux de gaz (31) s'étendant parallèlement ;
h. à chaque canal de gaz (31) est associée une pluralité d'éléments accumulateurs d'énergie (10).

2. Module de batterie selon la revendication 1, ayant la caractéristique supplémentaire suivante :
a. à chaque point de rupture préétabli (21) est associé exactement un élément accumulateur d'énergie (10).

3. Module de batterie selon la revendication 1 ou la revendication 2, ayant la caractéristique supplémentaire suivante :
a. les éléments accumulateurs d'énergie (10) sont munis chacun d'un élément de surpression, en particulier d'une soupape de surpression.

4. Module de batterie selon l'une quelconque des revendications précédentes, ayant au moins l'une des caractéristiques supplémentaires suivantes :
a. les points de rupture préétablis (21) dans la plaque thermiquement stable (20) sont configurés chacun sous forme de volet rabattable ;
b. les points de rupture préétablis (21) dans la plaque thermiquement stable (20) sont configurés chacun sous forme de point de rupture préétabli partiellement circulaire ;

5. Module de batterie selon l'une quelconque des revendications précédentes, ayant au moins l'une des caractéristiques supplémentaires suivantes :
a. les points de rupture préétablis (21) dans la plaque thermiquement stable (20) sont configurés sous forme de perforations ;
b. les points de rupture préétablis (21) dans la plaque thermiquement stable (20) sont configurés sous forme d'amincissements locaux de l'épaisseur de matière de la plaque thermiquement stable.

6. Module de batterie selon l'une quelconque des revendications précédentes, ayant au moins l'une des caractéristiques supplémentaires suivantes :
a. la plaque thermiquement stable (20) est constituée de minéraux incorporés dans de la matière plastique ;
a. la plaque thermiquement stable (20) est constituée de silicates lamellaires incorporés dans de la résine synthétique ;
c. la plaque thermiquement stable (20) est constituée de mica synthétique.

7. Module de batterie selon la revendication 1, ayant la caractéristique supplémentaire suivante :
a. le couvercle (30 ; 231) est formé par un couvercle de boîtier.

8. Module de batterie selon la revendication 7, ayant la caractéristique supplémentaire suivante :
a. le couvercle (30) forme un serre-flan pour la plaque thermiquement stable(20);
b. le couvercle (30) présente une forme ondulée repliée.

9. Module de batterie selon l'une quelconque des revendications précédentes, ayant au moins l'une des caractéristiques supplémentaires suivantes :
a. les éléments accumulateurs d'énergie (10) sont des cellules rondes cylindriques ;
b. les éléments accumulateurs d'énergie (10) sont des cellules lithium-ion ou des cellules sodium-ion.
